# EUROPEAN PATENT APPLICATION

(11) **EP 2 741 470 A1**
(43) Date of publication of application: **11.06.2014**
(21) Application number: 12306516.1
(22) Date of filing: 04.12.2012
(51) Int. Cl.: H04L 29/08, H04W 4/02

(54) **Method for transferring data content a very high speed**

(71) Applicant: Orange, 75015 Paris (FR)
(72) Inventor: Derham, Thomas, Tokyo 194-0022 (JP)

(57) **Abstract**

The invention relates to a method for retrieving at least a data content stored in a server of a communication network, said method being executed by a network equipment of the communication network being connected to at least one access point of the communication network, the method comprising the steps of :
- Receiving a first request for downloading the data content stored in the server,
- Identifying the access point of the communication network from which the data content is to be retrieved,
- Transmitting the data content to the identified access point of the communication network.

## Description

The present invention generally relates to the transfer of data content by means of HotSpots.

HotSpots are widely deployed to enable access to the Internet. It enables the exchange of data content between the Internet and user equipments in a bidirectional way.

However, the exchange of data content of big size or of high definition is not an easy task because the bandwidth of the transmission channel established between the user equipment and the HotSpot and the bandwidth of the back-haul do not enable transmission at a convenient speed. This results in a poor Quality of experience on the user side.

It is an objective of the present invention to overcome disadvantages and/or make improvements in the prior art.

In that respect, the present invention relates to a method for retrieving at least a data content stored in a server of a communication network, said method being executed by a network equipment of the communication network being connected to at least one access point of the communication network, the method comprising the steps of :
- Receiving a first request for downloading the data content stored in the server,
- Identifying the access point of the communication network from which the data content is to be retrieved,
- Transmitting the data content to the identified access point of the communication network.

Such a method enables a user to retrieve a large data content stored, for example in the cloud, at a hot spot of their choosing and at a very high speed especially when the network equipment and the access point are connected using a very high broadband access such as a 60 GHz access.

By first downloading the data content in the network equipment and transmitting said data content to the access point from which it is to be retrieved, the method of the invention helps solving the problem of the back-haul connection being slower because of the network load.

According to a characteristic of the method of the invention, the first request for downloading comprises a parameter identifying the access point from which the data content is to be retrieved.

The user of the user equipment can specify the access point from which they want the data content to be retrieved from. For example, knowing the user of the user equipment are to take a flight, they can specify to the network equipment that they want the data content to be retrieved from an access point located at an airport.

According to a characteristic of the method of the invention, the parameter identifying the access point from which the data content is to be retrieved is a geographical position of the access point.

The user of the user equipment can select the access point from which they want the data content to be retrieved by means of the geographical position of the access point. The user can, for example, select the access point by selecting said access point on a map.

According to a characteristic of the method of the invention, the method comprises the steps of :
- Sending a message to a user equipment intended to retrieve the data content from an access point, said message comprising a parameter indicating that the user equipment is within a given radius of an access point,
- Receiving a second request, emitted by the user equipment, for downloading the data content on the access point identified in the message.

The user of the user equipment can be notified of the vicinity of an access point from which the data content can be retrieved. If the user of the user equipment are interested in retrieving the data content from said access point, a request in sent to the network equipment for downloading the data content to the access point so that when the user of the user equipment reach the access point, the data content is ready to be transferred on the user equipment.

According to a characteristic of the method of the invention, the radius is a function of a value of a bandwidth of a transmission channel established between the network equipment and the access point and an average moving speed of the user equipment.

The radius is determined to give enough time for the network equipment to download the data content on the access point knowing the bandwidth of the transmission channel established between the access point and the network equipment and the moving speed of the user of the user equipment.

Thus when the user of the user equipment reach the access point, the data content is already stored on the access point and is ready to be transferred on the user equipment.

According to a characteristic of the method of the invention, the first request comprises an identifier of a user equipment intended to retrieve the data content from the identified access point. *

The transmission of the data content on the user equipment first requires the user equipment to be authenticated. This prevents the transferring of private data content to an unauthorized user equipment.

According to a characteristic of the method of the invention, the identifier of the user equipment intended to retrieve the data content is transmitted to the identified access point.

The authentication of the user equipment can be done locally by the access node.

Another object of the invention is a network equipment of a communication network being connected to at least one access point of the communication network from which at least a data content stored in a server of a communication network is to be retrieved, said network equipment comprising :
- Means for receiving a first request for downloading the data content stored in the server,
- Means for identifying the access point of the communication network from which the data content is to be retrieved,
- Means for transmitting the data content to the identified access point of the communication network.

The invention also concerns a communication system comprising at least a server storing at least a data content to be retrieved, and at least a network equipment being connected to at least one access point, the network equipment comprising :
- Means for receiving a first request for downloading the data content stored in the server,
- Means for identifying the access point of the communication network from which the data content is to be retrieved,
- Means for transmitting the data content to the identified access point of the communication network.

Finally, one object of the invention concerns a computer program, in particular a computer program on or in an information medium or memory, suitable for implementing the method object of the invention. This program can use any programming language, and be in the form of source code, binary code, or of code intermediate between source code and object code such as in a partially compiled form, or in any other desirable form for implementing the communication methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The programs according to the invention may in particular be downloaded from a network of Internet type.

The present system and method are explained in further detail, and by way of example, with reference to the accompanying drawings wherein:
FIG. 1 represents a communication system in which the invention is implemented,
FIG. 2 represents an access point capable of implementing the method of the invention,
FIG. 3 represents the steps of the method for retrieving a data content of several MegaBits object of the invention,
FIG. 4 represents a method for uploading a data content stored on a user equipment:

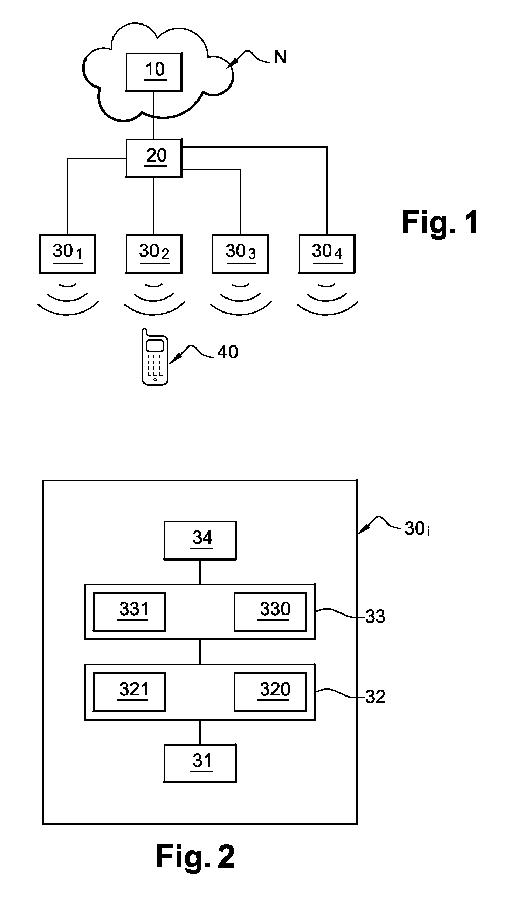

**Figure 1** represents a communication system in which the invention is implemented. The communication system comprises a communication network N comprising at least one server 10 in which data contents are stored. Such a data content can be personal data content, i.e. associated to a given user and only accessible by said user, like personal data content stored in the Cloud, or public data content accessible to all from the Internet.

The server 10 is connected through the communication network N to at least one network equipment 20 acting like a proxy. The network equipment 20 acts for example as a central Cloud solution for retrieving data content from the Internet.

The network equipment 20 is connected to a plurality of access points 30ᵢ, i ∈ {1, 2, ..., N} by means of a broadband connection such as a 3G connection, an LTE (*Long Term Evolution*) connection, a WiFi (*Wireless Fidelity*) connection or an Ethernet link.

An access point 30ᵢ is for example a HotSpot. An access point 30ᵢ is represented on **Figure 2**. Such an access point 30ᵢ comprises a first interface 31 enabling the establishment of a broadband connection with the network equipment 20. For example, this interface 31 is an Ethernet port.

The first interface 31 is connected to first storage means 32. The first storage means 32 are for example a hard Disk Drive of high storage capacity. The first storage means 32 comprise two partitions, a first partition 320 is dedicated to the data contents downloaded from the network equipment 20 and a second partition 321 is dedicated to the data contents to be uploaded on the network equipment 20.

The first storage means 32 are connected to second storage means 33. The second storage means 33 are for example a Solid State Drive which enables a high speed storage of data contents. The first storage means 33 comprise two partitions, a first partition 330 is dedicated to the data contents downloaded from the network equipment 20 and a second partition 331 is dedicated to the data contents to be uploaded on the network equipment 20.

The second storage means 33 are connected to a second interface 34 enabling the establishment of a very high broadband connection with at least one user equipment 40 destined to retrieved data contents downloaded from the network equipment 20 or to upload data content on the network equipment 20. For example, this second interface 32 is a Wigig 60 GHz *(Wireless Gigabit Alliance* or 802.11 ad) interface or a WiFi ac 5GHz interface, enabling fast data transfer between the HotSpot and a user equipment attached to said HotSpot.

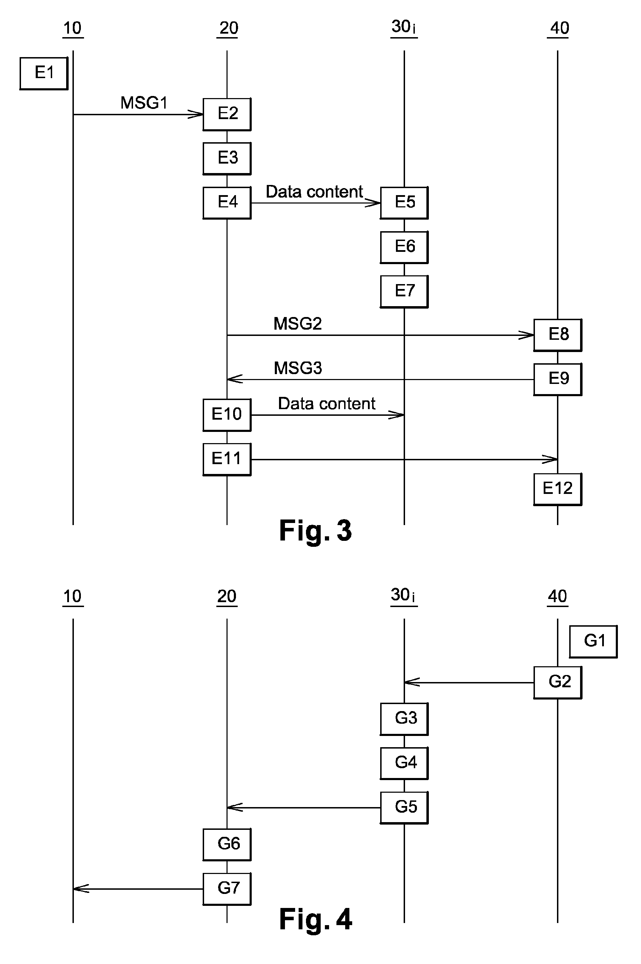

**Figure 3** represent a method for retrieving a data content of several MegaBits stored on the server when a user decides to download said data content on their user equipment 40.

In a step E1 the user chooses the data content to be downloaded on their user equipment 40. The data content to be downloaded is stored for example on the server 10.

In a step E2, the network equipment 20 receives a first request MSG1 for downloading the data content stored in the server 10. The request MSG1 is sent by the server 10. In an embodiment of the method of the invention, the request MSG1 comprises an identifier of the user equipment 40 intended to retrieve the data content.

In a step E3, the network equipment 20 identifies, among the N access point 30ᵢ, the access point 30ᵢ from which the data content is to be retrieved. In a first embodiment of the method of the invention, the request MSG1 comprises a parameter identifying the access point 30ᵢ from which the data content is to be retrieved. Such a parameter may be a geographical position of the access point 30ᵢ.

In a step E4, the network equipment 20 transmits the data content to the access point 30ᵢ. The data content is stored in the first partition 320 of the first storage means 32 of the access point 30ᵢ, during a step E5.

When the user equipment 40 enters the transmission range of the access point 30ᵢ, or if the user has specified a time at which they want the data content ready to be transmitted to their user equipment 40, a few moment prior this specified time, the data content is transmitted in the first partition 330 of the second storage means 33 of the access point 30ᵢ, in a step E6.

In a step E7, the data content is transferred from the second storing means 33 to the user equipment 40 at a very high rate, e.g. 7 Gb/s (GigaBytes per second).

In a second embodiment of the method of the invention, the user does not specify an access point 30ᵢ from which they want to retrieve the data content. Instead, the user equipment 40 receives in a step E8, a message MSG2 comprising a parameter indicating that the user equipment 40 is within a given radius of an access point 30ᵢ. the message MSG2 is sent by the network equipment 20.

If the user is interested in retrieving the data content from the proposed access point 30ᵢ, the user equipment 40 sends a second request MSG3 to the network equipment 20, for downloading the data content on the access point 30ᵢ identified in the message MSG2 in a step E9.

In a step E10, the network equipment 20 transmits the data content to the access point 30ᵢ. The data content is stored in the first partition 320 of the first storage means 32 of the access point 30ᵢ.

The value of the radius is a function of a value of the bandwidth of the transmission channel established between the network equipment 20 and the access point 30ᵢ and an average moving speed of the user equipment 40. The value of the radius is calculated so that when the user equipment 40 is close enough to the access point 30ᵢ to start the transmission of the data content, the data content is already completely downloaded from the network equipment 20 and is already stored in the first partition 330 of the second storage means 33 of the access node 30ᵢ, i.e. the data content is ready to be transmitted when the user equipment 40 reaches the access node 30ᵢ.

In another embodiment of the method of the invention, the identifier of the user equipment intended to retrieve the data content comprised in the first request MSG1, is transmitted by the network equipment 20 to the identified access point 30ᵢ in a step E11.

In a step E12, prior to transmitting the data content to the user equipment 40, the access point 30ᵢ authenticates the user equipment 40 using the received identifier of the user equipment intended to retrieve the data content.

**Figure 4** represent a method for uploading a data content stored on the user equipment 40 on the server 10.

In a step G1 the user chooses the data content to be uploaded from their user equipment 40 to the server 10.

In a step G2, the user equipment 40 transmits the data content to the access point 30ᵢ. The data content is stored in the second partition 331 of the second storage means 33 of the access point 30ᵢ in a step G3.

When all the data content is transmitted in the second partition 331 of the second storage means 33 of the access point 30ᵢ, the data content is then transmitted to the second partition 321 of the first storage means 32 of the access point 30ᵢ, in a step G4.

Periodically, the access point 30ᵢ uploads the data contents stored in the second partition 321 of the first storage means 32 on the network equipment 20 during a step G5.

In a step G6, the network equipment 20 sorts the uploaded data contents. During this step, the network equipment 20 determines to which server of the communication network N a given data content must be transmitted in order to be stored.

When the server has been identified, the network equipment 20 transmits the data content to the server in a step G7.

## Claims

1. A method for retrieving at least a data content stored in a server of a communication network, said method being executed by a network equipment of the communication network being connected to at least one access point of the communication network, the method comprising the steps of :
- Receiving a first request for downloading the data content stored in the server,
- Identifying the access point of the communication network from which the data content is to be retrieved,
- Transmitting the data content to the identified access point of the communication network.

2. Method for retrieving at least a data content according to claim 1, wherein the first request for downloading comprises a parameter identifying the access point from which the data content is to be retrieved.

3. Method for retrieving at least a data content according to claim 2, wherein the parameter identifying the access point from which the data content is to be retrieved is a geographical position of the access point.

4. Method for retrieving at least a data content according to claim 1 further comprising the steps of :
- Sending a message to a user equipment intended to retrieve the data content from an access point, said message comprising a parameter indicating that the user equipment is within a given radius of an access point,
- Receiving a second request, emitted by the user equipment, for downloading the data content on the access point identified in the message.

5. Method for retrieving at least a data content according to claim 4, wherein the radius is a function of a value of a bandwidth of a transmission channel established between the network equipment and the access point and an average moving speed of the user equipment.

6. Method for retrieving at least a data content according to claim 1, wherein the first request comprises an identifier of a user equipment intended to retrieve the data content from the identified access point.

7. Method for retrieving at least a data content according to claim 6, wherein the identifier of the user equipment intended to retrieve the data content is transmitted to the identified access point.

8. A network equipment of a communication network being connected to at least one access point of the communication network from which at least a data content stored in a server of a communication network is to be retrieved, said network equipment comprising :
- Means for receiving a first request for downloading the data content stored in the server,
- Means for identifying the access point of the communication network from which the data content is to be retrieved,
- Means for transmitting the data content to the identified access point of the communication network.

9. Communication system comprising at least a server storing at least a data content to be retrieved, and at least a network equipment being connected to at least one access point, the network equipment comprising :
- Means for receiving a first request for downloading the data content stored in the server,
- Means for identifying the access point of the communication network from which the data content is to be retrieved,
- Means for transmitting the data content to the identified access point of the communication network.

10. Computer program **characterized in that** it comprises program code instructions for the implementation of the steps of the method for retrieving at least on data content as claimed in claim 1 when the program is executed by a processor.
